(19) Europäisches Patentamt
European Patent Office
Office européen des brevets

(11) **EP 3 806 374 B1**

(12) **EUROPEAN PATENT SPECIFICATION**

(45) Date of publication and mention
of the grant of the patent:
**09.03.2022 Bulletin 2022/10**

(21) Application number: **20150533.6**

(22) Date of filing: **07.01.2020**

(51) International Patent Classification (IPC):
**H04L 5/00** *(2006.01)*     *H04W 72/00* *(2009.01)*

(52) Cooperative Patent Classification (CPC):
**H04L 5/0051;** H04L 5/0094; H04W 48/12

(54) **METHOD FOR ENHANCEMENT OF NEIGHBOR CELL INTERFERENCE ROBUSTNESS FOR NB-IOT**

VERFAHREN ZUR VERBESSERUNG DER NACHBARZELLENSTÖRUNGSROBUSTHEIT FÜR NB-IOT

PROCÉDÉ POUR AMÉLIORER LA ROBUSTESSE AUX INTERFÉRENCES ENTRE CELLULES VOISINES POUR NB-IDO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.10.2019 EP 19202742**

(43) Date of publication of application:
**14.04.2021 Bulletin 2021/15**

(73) Proprietor: **Shenzhen Goodix Technology Co., Ltd. Shenzhen, Guangdong 518045 (CN)**

(72) Inventor: **Bury, Andreas
01099 Dresden (DE)**

(74) Representative: **Lippert Stachow Patentanwälte Rechtsanwälte
Partnerschaft mbB
Krenkelstraße 3
01309 Dresden (DE)**

(56) References cited:
**EP-A1- 3 346 757      WO-A1-2019/004729
CN-A- 110 602 740      US-A1- 2018 124 644**

**Description**

The invention relates to a method for enhancement of neighbor cell interference robustness for Narrowband-Internet-of-things (NB-IoT).

Underlying state-of-the-art of the present invention is the 3GPP NB-IoT standard, Release 15, in particular the document 3GPP TS 36.211, V15.4.0, from December 2018.

The 3rd generation partnership project (3GPP) narrowband internet-of-things (NB-IoT) cellular communication standard targets low-bandwidth communication for sensor / actor devices utilizing low cost / low-complexity user equipment (UE), via a radio network operated in licensed bands. An NB-IoT cellular network operates at a frequency re-use factor of 1, i.e., all base stations transmit at the same carrier frequency. Hence, user equipment signal reception is disturbed by interference from other base stations. In addition, NB-IoT targets reception under very low signal-to-noise ratio (SNR) condition, in order to enlarge coverage, e.g., for reception in a basement. Noise is the thermal noise generated at the radio frequency receiver input stage. Thermal noise is statistically white, i.e., uncorrelated when considering multiple noise sampled. In order to achieve a good receiver performance at very low SNR, data is sent multiple times and the receiver performs incoherent or coherent combining to enhance the signal and average out the noise contribution, where coherent combining offers better performance but typically has more stringent synchronization requirements. State-of-the-art NB-IoT UE receivers perform combining, e.g., in NPSS (Narrowband primary synchronization signal) detection and NSSS (Narrowband secondary synchronization signal) detection of cell search, in channel estimation, in NRSRP (Narrowband Reference Signal Received Power) measurement, time- and frequency offset estimation. Impact of interference from other base stations is determined by the signal construction as defined in TS136.211. The problem addressed in this invention is that the narrowband reference signal (NRS) pattern is frame-periodic, i.e., it repeats periodically every 10 milliseconds. Noise reduction due to averaging will not work for period signals, such as the NRS, and hence rejection of NRS from another cell is limited as indicated by the following scalar product ratio

$$r = \frac{\sum_{n=0}^{N-1} s_1(n) \cdot s_2(n)^*}{\sum_{n=0}^{N-1} s_1(n) \cdot s_1(n)^*}, \quad (\text{eq. } 1)$$

where $s_1(n)$ is the NRS symbol sequence related to cell 1, $s_2(n)$ is the NRS symbol sequence related to cell 2, and N is the sequence length.

Physical layer procedures impacted by interfering NRS include cell search, measurement, and reception of control information and data. The amount of impact at given conditions may vary for specific NB-IoT UE modem implementations.

So, the object of the present invention is to find a method for reducing the impact of interference from other base stations, especially in cell search, measurement, and reception of control information and data.

The object will be solved by a method that enhances the robustness against neighbor cell interference between user equipment (UE) and neighborly base stations for Narrowband Internet-of-thing (NB-IoT), wherein a 1-frame narrowband reference signal (NRS) defined by the 3GPP NB-IoT standard, Release 15, TS 36.211 V15.4.0, from December 2018 providing phase reference for a demodulation of downlink channels between a base station and the UE is modified by generating a modified narrowband reference signal (NRS) of 8-frame length which consists of 160 successive slots, resulting in a factor 8 longer pseudo-random sequence periodically repeated compared to the 1-frame NRS.

The NRS generation is presently defined in 3GPP TS 36.211, section 10.2.6.1, which refers to section 6.10.1.1, which is repeated here for convenience:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots,2N_{RB}^{\text{maxDL}} - 1$$

$$(\text{eq. } 2)$$

where $n_s$ is the slot number within a radio frame and $l$ is the OFDM symbol number within the slot. For NB-IoT there are 1024 cyclically repeated radio frames, each of 10 ms duration. A radio frame is partitioned into 10 subframes (SFs), each one composed of two slots. The pseudo-random sequence $c(i)$ is defined in paragraph 7.2 of the ETSI TS 136.211 V15.3.0 (2018-10) document and not repeated here for clarity. The pseudo-random sequence generator shall be initialized with

$$c_{\text{init}} = 2^{10} \cdot \left(7 \cdot (n_s' + 1) + l + 1\right) \cdot \left(2 \cdot N_{ID}^{\text{cell}} + 1\right) + 2 \cdot N_{ID}^{\text{cell}} + N_{CP} \quad (\text{eq. } 3)$$

at the start of each OFDM symbol where

$$n_s' = \begin{cases} 10\lfloor n_s/10 \rfloor + n_s \bmod 2 & \text{for frame structure type 3 when the CRS is part of a DRS} \\ n_s & \text{otherwise} \end{cases}$$

$$N_{CP} = \begin{cases} 1 & \text{for normal CP} \\ 0 & \text{for extended CP} \end{cases}$$

As mentioned above, the term radio frame therein refers to 20 successive slots, i.e., $n_s$ ranges from 0 to 19. The proposed inventive alternative NRS generation uses the same equation but defines an 8-frame consisting of 160 successive slots. Thus, $n_s$ would count from 0 to 159. As a result, a factor 8 longer pseudo-random sequence would be periodically repeated. When receiving superimposed 8-frame periodic NRS interference from another than the wanted base station, the factor 8 longer period gives less opportunity for constructive superposition of NRS interference during signal combining across multiple frames in time. Hence the impact of interference from other base stations can be reduced. Referring to Eq.1, smaller values of r indicate a better rejection of neighbor cell NRS interference. Enlarging N by a factor of 8 as proposed in this invention is a means to reduce r, given that the sequences $s_1(n)$ and $s_2(n)$ have a pseudo-random nature.

To be more precise, the background of proposing an 8-frame period is as follows: When attaching to a base station the UE first synchronizes to its signal via cell search, based on the narrowband primary synchronization signal (NPSS) and the narrowband secondary synchronization signal (NSSS), where NPSS provides initial time-frequency synchronization and NSSS yields cell-ID and 8-frame timing. NRS are not utilized during said cell search. In a next step the UE receives the narrowband physical broadcast channel (NPBCH) and the system information block 1 (SIB1), before a first transmission is initiated from UE to base station via the narrowband physical random-access channel (NPRACH). NRS demodulation is needed during NPBCH reception and during SIB1 reception.

In a preferred embodiment of the inventive method, the UE utilizes a dedicated signaling bit of a so-called master information block (MIB) carried by the narrowband physical broadcast channel (NPBCH) send from base station to the UE for selecting a 1-frame or 8-frame NRS mode.

The signaling bit is presently an unused ("spare") bit of the MIB carried by the NPBCH (see also content definition in, e.g., ETSI TS 136 331 V15.6.0, section 6.7.2, "MasterInformationBlock-NB", size definition in ETSI TS 136 212 V15.6.0, section 6.4.1 - 34 bits, also considering Table 6.2.1 therein). Thus in the preferred embodiment of the invention, a modified ASN1 definition of MasterInformationBlock-NB is proposed.

In other words, the UE blindly tries the 1-frame and the 8-frame periodic NRS, and receives confirmation with respect to the selected NRS mode via the dedicated signaling bit of the master information block.

It is mandatory to maintain backwards compatibility to 1-frame periodic NRS depending on how the UE modem is configured or implemented. Therefore, it is necessary to signal the distinction between 1-frame and 8-frame periodic NRS. This is possible by utilizing a spare (i.e., presently unused) bit in the master information block narrow-band (MIB-NB) data bits carried by the NPBCH. For NPBCH reception following cell search, the UE would try both variants, 1-frame and 8-frame periodic NRS, and receive confirmation with respect to selected NRS mode via the newly introduced dedicated signaling bit. This approach of trying multiple alternatives is sometimes regarded as 'blind decoding'. According to 3GPP TS 36.331 V15.6.0, section 6.7.2 for the definition of MIB-NB content, including 10 spare bits.

In another preferred embodiment of the inventive method, the UE utilizes one information bit in the Narrowband secondary synchronization signal (NSSS) for distinguishing between 1-frame and 8-frame periodic NRS, by doubling the present number of 2016 distinct NSSS sequences to 4032, the present NSSS sequence is defined by the 3GPP NB-IoT standard, Release 15 to distinguish 504 cell-IDs at 4 distinct 20-ms timings within an 80-ms ambiguity.

This will be accomplished by modifying the definition in ETSI TS 136 211 V15.5.0, section 10.2.7.2.1, into

$$\theta_f = \frac{33}{132}(n_f/2)\bmod 4 + \frac{33}{264}q \ ,$$

$q$ = 0 for 1-frame periodic NRS

$q$ = 1 for 8-frame periodic NRS.

This embodiment is also advantageous, because NSSS yields the 8-frame timing, and hence it is possible to define 8-frame periodic NRS in sync with the 8-frame timing.

However, this has a drawback of doubled receiver complexity during NSSS detection phase, and degraded NSSS detection performance, given that twice the number of sequences would be squeezed into the signal space, thus reducing mutual distances in signal space, i.e., increasing false detection rate.

In further embodiment the inventive method a receiver of a UE modem blindly decodes the NPBCH using both variants, 1-frame periodic and 8-frame periodic NRS and utilizes the dedicated signaling bit of the master information block (MIB) to conform the given NRS mode.

In further embodiment the inventive method a receiver of a UE modem uses the information bit in the Narrowband secondary synchronization signal (NSSS) according to a subset where the found NSSS sequence belongs to, indicating the use of either 1-frame periodic or 8-frame periodic NRS.

Document WO 2019/004729 A1 (LG ELECTRONICS INC) 3 January 2019 (2019-01-03); & US 2020/178258 A1 (PARK CHANGHWAN [KR] ET AL) 4 June 2020 (2020-06-04) relates to a method for efficiently performing a transmission and reception of a radio signal. According to the conventional method shown in table 7, the radio signal is transmitted every 10 ms within 80 ms. The invention disclosed in WO 2019/004729 A1 modifies this method according to table 8. But table 8 only refers to k = 100 resource elements, which are the 100 data resource elements of the Narrowband Physical broadcast channel (NPBCH) according to 3GPP NB-IoT standard, Release 15, TS 36.211, V15.4.0 of December 2018. WO 2019/004729 A1 discloses NRS, also in paragraph [0133]. However, paragraph [0133] in WO 2019/004729 A1 relates to the practical case of an anchor cell where only a part of the subframes within a frame would be valid downlink frames, namely those which are neither of NPBCH, NPSS, NSSS, or system information subframes.

The invention will be explained in more detail using an exemplary embodiment.

Fig.    Visualization of the enlarged NRS period.

The figure shows the composition and creation of the NRS pattern repetition in a transmitter of a base station. One subframe comprises 14 OFDM symbols, with the black highlighted elements indicating the NRS resource elements (in normal subframes), shown here for the 1-TX case only for the sake of simplicity. Ten subframes form one frame. Eight of these frames form one NRS repetition period according to the invention - hence one 8-frame repetition. The hatched subframes indicate the NSSS subframes during the eight frames transmitted from the base station to the UE. According to the state-of-the-art the NRS pattern repetition period has a length of one frame. According to the present inventive method the alternative NRS pattern repetition period has a length of eight frames.

For a first synchronization between a UE and a base station in frame and subframe and in order to determine the cell ID the UE uses the narrowband primary synchronization signal (NPSS) and the narrowband secondary synchronization signal (NSSS), where NPSS provides initial time-frequency synchronization and NSSS yields cell-ID and 8-frame timing.

In a next step the UE receives the narrowband physical broadcast channel (NPBCH) and the system information block 1 (SIB1), before initiating a first transmission from UE to base station via the narrowband physical random-access channel (NPRACH). The narrowband reference signal demodulation is first needed during NPBCH reception and during SIB1 reception. The narrowband reference signal (NRS) is transmitted in all SFs which may be used for broadcast or dedicated DL transmission, no matter if data is actually transmitted or not. Depending on the transmission scheme, NRS is either transmitted on one antenna port or on two. Its values are created with the NCellID taken for the Narrowband physical cell ID (NCellID). NPBCH carries the Narrowband Master Information Block (MIB-NB). The MIB-NB contains 34 bits and is transmitted over a time period of 640ms, i.e. 64 radio frames. If the modified NRS contains a factor 8 longer pseudo-random sequence which is periodically repeated and a UE receives the NRS from different neighborly base stations, said 8-frame periodic NRS are superimposed. As a result the factor 8 longer period gives less opportunity for constructive superposition of NRS interference during signal combining across multiple frames in time. Hence the impact of interference from other base stations can be reduced.

In another embodiment the UE utilizes a one information bit in the Narrowband secondary synchronization signal (NSSS) for distinguishing between 1-frame and 8-frame periodic NRS. The NSSS sequence is generated from a length-131 frequency domain Zadoff-Chu sequence, binary scrambled and cyclically shifted depending on the radio frame number. NCellID is an additional input parameter defining 504 cell-IDs. These 504 cell IDs cover four distinct 20-ms timings within an 80-ms ambiguity. If these 2016 distinct NSSS sequences are doubled to 4032, it is possible to encode one information bit to distinguish between 1-frame and 8-frame periodic NRS.

Summarizing the invention, the key idea is to modify the definition of NRS such that the period of this pseudo-random signal is maximized within other constraints given by NB-IoT standard. Maximizing the repetition period offers a better randomness with the various coherent/incoherent combining algorithms utilized in NB-IoT UEs operating at deep coverage / low SNR condition. The switching between the presently given definition of NRS by the present 3GPP NB-IoT standard and an alternative NRS definition with enlarged period is supported for backwards compatibility.

## List of Reference Signs

1  resource element
2  OFDM symbol
3  one subframe
4  one frame
5  NSSS subframe
6  NRS pattern repetition period length of 1 frame
7  NRS pattern repetition period length of 8 frames

## Claims

1. A method for enhancement of neighbor cell interference robustness between user equipment, UE, and neighborly base stations for Narrowband Internet-of-thing, NB-IoT, wherein a 1-frame narrowband reference signal (6), NRS, defined by the 3GPP NB-IoT standard, Release 15, TS 36.211 V15.4.0, from December 2018 providing phase reference for a demodulation of downlink channels between a base station and the UE is modified by generating a narrowband reference signal, NRS of 8-frame length (7) which consists of 160 successive slots, resulting in a factor 8 longer pseudo-random sequence periodically repeated compared to the former 1-frame NRS.

2. The method according to claim 1, wherein the UE utilizes a signaling bit of a so-called master information block, MIB, carried by the narrowband physical broadcast channel, NPBCH, send from the base station to the UE for selecting a 1-frame periodic (6) or 8-frame periodic (7) NRS mode.

3. The method according to claims 1, wherein the UE utilizes an information bit in the Narrowband secondary synchronization signal, NSSS, for distinguishing between 1-frame periodic (6) and 8-frame periodic (7) NRS, by doubling a present number of 2016 distinct NSSS sequences to 4032, the present NSSS sequence is defined by the 3GPP NB-IoT standard, Release 15, TS 36.211 V15.4.0, from December 2018 to distinguish 504 cell-IDs at 4 distinct 20-ms timings within an 80-ms ambiguity.

4. The method according to claim 2, wherein a receiver of a UE modem blindly decodes the NPBCH using both variants, 1-frame periodic (6) and 8-frame periodic (7) NRS and utilizes the dedicated signaling bit of the master information block, MIB, to conform the given NRS mode.

5. The method according to claim 3, wherein a receiver of a UE modem uses the information bit in the Narrowband secondary synchronization signal, NSSS, according to a subset where the found NSSS sequence belongs to, indicating the use of either 1-frame periodic (6) or 8-frame periodic (7) NRS.

## Patentansprüche

1. Verfahren zur Verbesserung der Robustheit gegen Störung durch benachbarte Zellen zwischen Anwendergerät, UE, und benachbarten Basisstationen für schmalbandiges Internet der Dinge, NB-IoT, wobei ein schmalbandiges Bezugssignal (6), NRS, mit 1 Rahmen, das durch die 3GPP NB-IoT-Norm, Ausgabe 15, TS 36.211 V15.4.0, vom Dezember 2018, definiert ist, das Phasenbezug für eine Demodulation von Downlink-Kanälen zwischen einer Basisstation und dem UE bereitstellt, geändert wird, indem ein schmalbandiges Bezugssignal, NRS, mit einer 8-Rahmen-Länge (7) erzeugt wird, das aus 160 aufeinanderfolgenden Zeitfenstern besteht, was im Vergleich mit dem früheren 1-Rahmen-NRS zu einer um den Faktor 8 längeren pseudozufälligen Folge führt, die periodisch wiederholt wird.

2. Verfahren nach Anspruch 1, wobei das UE ein Signalisierungsbit eines sogenannten Master-Information-Blocks, MIB, der durch den schmalbandigen physischen Rundsendungskanal, NPBCH, geführt wird, der von der Basisstation an das UE gesendet wird, verwendet, um einen NRS-Modus mit einer 1-Rahmen-Periode (6) oder einer 8-Rahmen-Periode (7) auszuwählen.

3. Verfahren nach Anspruch 1, wobei das UE ein Informationsbit in dem schmalbandigen sekundären Synchronisationssignal, NSSS, zum Unterscheiden zwischen dem NRS mit einer 1-Rahmen-Periode (6) und einer 8-Rahmen-Periode (7) verwendet, indem eine vorliegende Anzahl von 2016 verschiedener NSSS-Folgen auf 4032 verdoppelt wird, wobei die vorliegende NSSS-Folge durch die 3GPP NB-IoT-Norm, Ausgabe 15, TS 36.211 V15.4.0, vom Dezember 2018 definiert ist, um 504 Zellen-ID an 4 verschiedenen 20-ms Zeitvorgaben innerhalb einer 80-ms Mehrdeutigkeit zu unterscheiden.

**4.** Verfahren nach Anspruch 2, wobei ein Empfänger eines UE-Modems den NPBCH unter Verwendung beider Varianten, des NRS mit einer 1-Rahmen-Periode (6) und des NRS einer 8-Rahmen-Periode (7), blind decodiert, und das dedizierte Signalisierungsbit des Master-Information-Blocks, MIB, verwendet, um dem gegebenen NRS-Modus zu entsprechen.

**5.** Verfahren nach Anspruch 3, wobei ein Empfänger eines UE-Modems das Informationsbit in dem schmalbandigen sekundären Synchronisationssignal, NSSS, gemäß einer Teilmenge, zu der die gefundene NSSS-Folge gehört, verwendet, das die Verwendung entweder des NRS mit einer 1-Rahmen-Periode (6) oder des NRS einer 8-Rahmen-Periode (7) angibt.

## Revendications

**1.** Procédé d'amélioration de la robustesse contre les interférences de cellules voisines entre un équipement utilisateur, UE, et des stations de base avoisinantes pour l'Internet des Objets à Bande Etroite, noté NB-IoT, un signal de référence à bande étroite de trame-1 (6), NRS, défini par la norme 3GPP NB-IoT, Version 15, TS 36.211 V15.4.0, de décembre 2018, fournissant une référence de phase pour une démodulation de canaux sur la liaison descendante entre une station de base et l'UE, étant modifié par génération d'un signal de référence à bande étroite, NRS, d'une longueur de trame-8 (7) comportant 160 slots successifs, donnant lieu à une séquence pseudo-aléatoire plus longue d'un facteur 8 qui se répète périodiquement par rapport à l'ancien NRS de trame-1.

**2.** Procédé selon la revendication 1, dans lequel l'UE utilise un bit de signalisation d'un bloc d'information maître, MIB, véhiculé par le canal physique de diffusion à bande étroite, NPBCH, envoyé depuis la station de base à l'UE pour la sélection d'un mode NRS périodique de trame-1 (6) ou périodique de trame-8 (7).

**3.** Procédé selon la revendication 1, dans lequel l'UE utilise un bit d'information dans le signal de synchronisation secondaire à bande étroite, NSSS, pour la différenciation entre le NRS périodique de trame-1 (6) et périodique de trame-8 (7), en doublant un nombre actuel de 2016 séquences de NSSS distinctes pour le porter à 4032, la séquence de NSSS actuelle est définie par la norme 3GPP NB-IoT, Version 15, TS 36.211 V15.4.0, de décembre 2018 pour différencier 504 ID-cellule à 4 temporisations distinctes de 20 ms avec une ambiguïté de 80 ms.

**4.** Procédé selon la revendication 2, dans lequel un récepteur d'un modem de l'UE décode à l'aveugle le NPBCH au moyen des deux variantes, à savoir le NRS périodique de trame-1 (6) et périodique de trame-8 (7), et utilise le bit de signalisation dédié du bloc d'information maître, MIB, pour conformer le mode NRS donné.

**5.** Procédé selon la revendication 3, dans lequel un récepteur d'un modem de l'UE utilise le bit d'information dans le signal de synchronisation secondaire à bande étroite, NSSS, selon un sous-ensemble auquel appartient la séquence de NSSS identifiée, indiquant l'utilisation du NRS soit périodique de trame-1 (6), soit périodique de trame-8 (7).

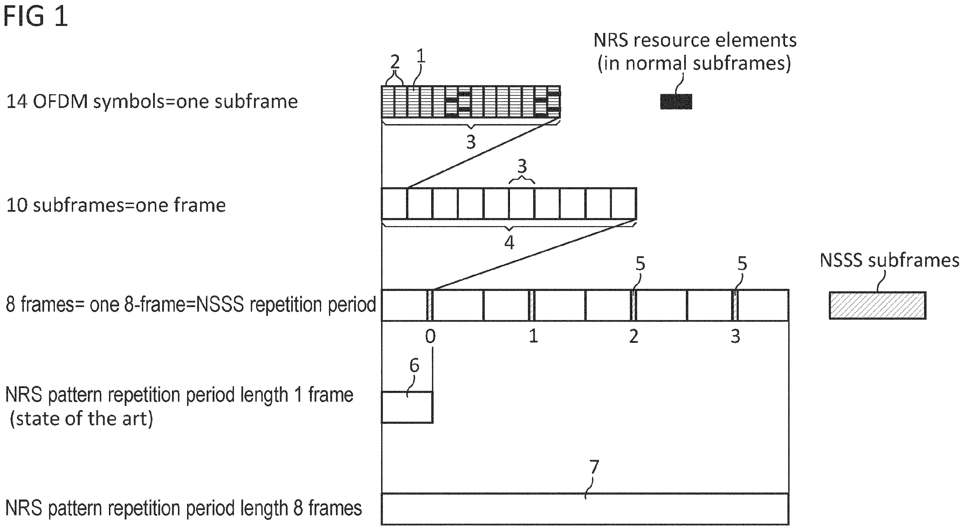

# FIG 1

NRS resource elements (in normal subframes)

NSSS subframes

14 OFDM symbols=one subframe

10 subframes=one frame

8 frames= one 8-frame=NSSS repetition period

NRS pattern repetition period length 1 frame (state of the art)

NRS pattern repetition period length 8 frames

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019004729 A1
- WO 20190103 A1
- US 2020178258 A1
- US 20200604 A1

### Non-patent literature cited in the description

- *3GPP TS 36.211, V15.4.0,* December 2018
- *3GPP NB-IoT standard, Release 15, TS 36.211 V15.4.0,* December 2018
- *TS 36.211, V15.4.0,* December 2018